# EUROPÄISCHE PATENTSCHRIFT

(11) **EP 1 350 713 B1**
(45) Veröffentlichungstag und Bekanntmachung des Hinweises auf die Patenterteilung: **02.11.2006**
(21) Anmeldenummer: 02028380.0
(22) Anmeldetag: 18.12.2002
(51) Int. Cl.: B62J 15/00, B62J 15/02

(54) **Vorrichtung zur Befestigung einer Schutzblechstrebe am Ausfallende einer Fahrradgabel**
Device for fixing a mud-guard to a bicycle fork
Dispositif de fixation d'un garde-boue à la fourche d'une bicyclette

(30) Priorität: 28.03.2002 DE 10214015
(43) Veröffentlichungstag der Anmeldung: 08.10.2003
(73) Patentinhaber: REB Reinhard Elbracht GmbH, 33607 Bielefeld (DE)
(72) Erfinder: Elbracht, Horst, 33607 Bielefeld (DE); Elbracht, André, 33719 Bielefeld (DE)
(74) Vertreter: Elbertzhagen, Otto

(56) Entgegenhaltungen:
- EP-A- 0 921 059
- DE-C2- 4 426 918

## Beschreibung

Die Erfindung betrifft eine Vorrichtung nach dem Oberbegriff des Patentanspruchs 1.

Bei einer bekannten Vorrichtung dieser Art (DE 44 26 918 C2) mit den Merkmalen des Oberbegriffs des ersten Anspruchs, weist der Halter eine Rasteinrichtung auf, die mit dem eine Öse aufweisenden Ende der Schutzblechstrebe zusammenwirkt. Die Öse der Schutzblechstrebe wird in den Rastbereich des Halters eingeschoben und darin in der Einschublage gehalten. Die Rastverbindung wird gelöst, wenn zwischen der Strebe und dem sich drehenden Rad ein Gegenstand eingeklemmt wird. Die Überwindung der Rastverbindung stellt sicher, daß das Rad in einem solchen Fall nicht schlagartig blockiert wird.

Die Größe der Haltekraft bei der bekannten Rastverbindung hängt wesentlich von dem Zustand der zusammenwirkenden Oberflächen ab. So wird bei völliger Trockenheit und korrodierter Strebe die Auslösekraft höher sein als bei einwandfreien Oberflächen, die möglicherweise noch durch Fett, Öl oder Regen benetzt sind.

Ausgehend von diesem Stand der Technik liegt der Erfindung die Aufgabe zugrunde, die Vorrichtung der als bekannt vorausgesetzten Art so auszubilden, daß das Lösen der Verbindung zwischen dem Halter und der Öse unabhängig von dem Oberflächenzustand des Halters und der Öse innerhalb enger Toleranzbereiche erfolgt.

Die Lösung dieser Aufgabe erfolgt mit den Merkmalen des Kennzeichnungsteils von Patentanspruch 1.

Das Vorsehen eines Scherbolzens zur Verbindung zwischen dem Halter und der Öse hat den Vorteil, daß die Auslösekraft bzw. das Auslösemoment innerhalb nur enger Grenzen variieren. Es ist möglich, den Scherbolzen so zu gestalten, daß die Auslösekräfte bzw. Auslösemomente nahezu vollständig gleich bleiben.

Bevorzugte Ausgestaltungen der Erfindung ergeben sich aus den Unteransprüchen.

Nachstehend wird eine bevorzugte Ausführungsform der Erfindung anhand der Zeichnung im einzelnen beschrieben. Es zeigen:
- Figur 1: - den Vorderbau eines Fahrrades mit der Befestigungsvorrichtung für die Schutzblechstrebe,

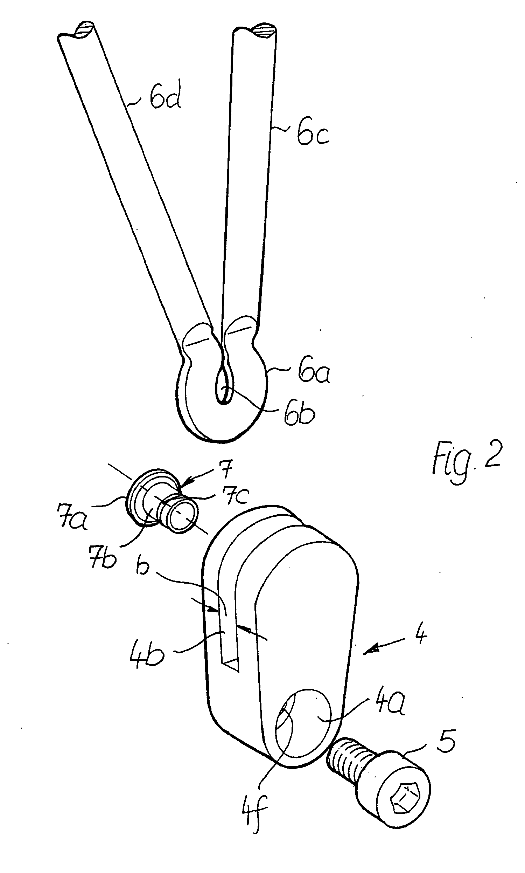

- Figur 2: - eine perspektivische Explosionsdarstellung eines Halters mit Scherbolzen und dem an eine Öse anschließenden Bereich der Doppelstrebe,
- Figur 3: - eine Draufsicht auf den Halter,
- Figur 4: - einen Schnitt entlang Ebene IV-IV gemäß Figur 3 bei in Figur 3 nicht dargestellter eingesetzter Öse und eingesetztem Scherbolzen,
- Figur 4a: - den mit IVa bezeichneten Bereich gemäß Figur 4 in vergrößerter Darstellung.

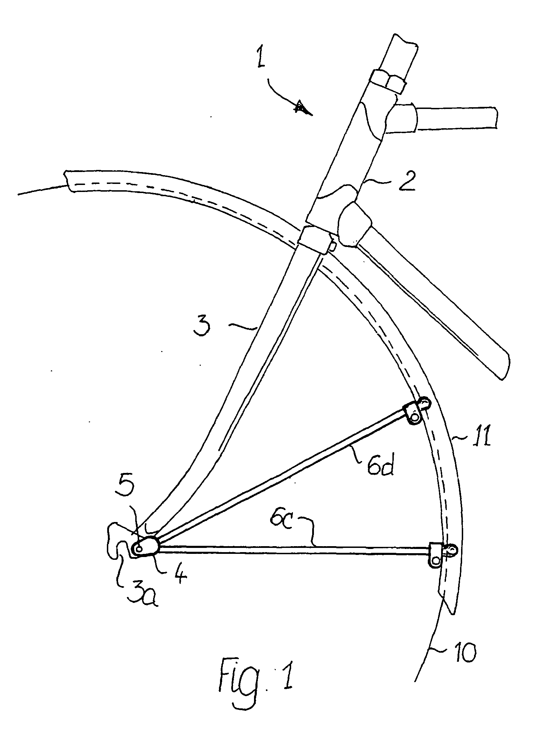

In Figur 1 ist der Vorderbau 1 eines Fahrrades dargestellt, in dessen Lenkkopf eine Vordergabel 3 schwenkbar gelagert ist. Die beiden Gabelrohre weisen an ihren unteren Enden Ausfallenden 3a auf, in die die nicht dargestellten Achsen des Vorderrads eingesetzt werden. Vom Vorderrad 10 ist nur schematisch die Umfangskontur angedeutet.

An den Ausfallenden der Fahrradgabel sind an beiden Gabelrohren jeweils Halter 4 mit Hilfe von Befestigungsschrauben 5 starr angeschraubt. Ein Schutzblech 11, das aus unterschiedlichsten Materialien bestehen kann, ist zu beiden Seiten mit den radial auswärts weisenden Enden einer Doppelstrebe in bekannter und hier nicht näher anzugebender Weise verbunden. Die Doppelstrebe mit den Streben 6c und 6d weist an ihrem innenliegenden Ende eine Öse 6a mit einer Durchgangsbohrung 6b auf.

Im montierten Zustand liegt die Öse 6a in einer als Schlitz 4b ausgebildeten Aufnahmeöffnung des Halters 4. Die Breite b des Schlitzes 4b entspricht der Dicke d der Schutzblechstrebe im Bereich der Öse 6a, wo sie abgeplattet ist.

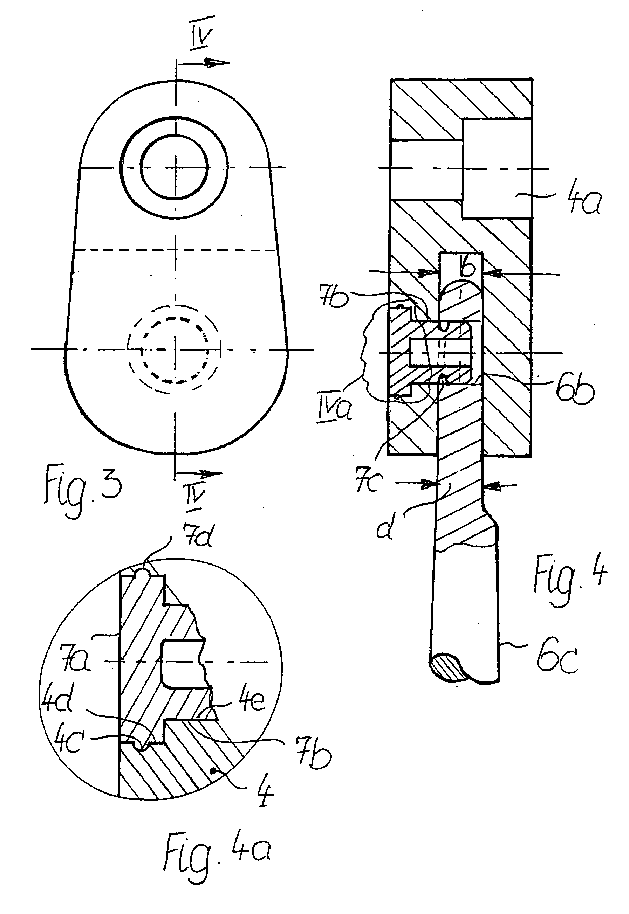

Im montierten Zustand (s. Fig. 4) greift das vordere Ende eines Schaftes 7b eines Scherbolzens 7 in die Durchgangsöffnung 6b der Öse 6a ein und durchsetzt diese teilweise. An den Schaft 7b des Scherbolzens 7 schließt sich ein Kopf 7a an, der im eingeschobenen Zustand des Scherbolzens 7 bündig mit der benachbarten Außenfläche des Halters 4 liegt. Der Kopf 7a weist eine umlaufende Rastrippe 7d auf, die mit einer umlaufenden Rastnut des Halters 4 zusammenwirkt und den Scherbolzen 7 in der Einschubposition rastend sichert.

Der Schaft 7b ist hohl ausgebildet. Er weist eine als über den Umfang umlaufende Nut ausgebildete Sollbruchstelle 7c auf. Die Sollbruchstelle 7c liegt im eingeschobenen Zustand des Scherbolzens sowohl innerhalb der als Schlitz 4b ausgebildeten Ausnehmung als auch innerhalb der Durchgangsöffnung 6b benachbart zur Stirnfläche der Öse 6a.

Der Durchmesser des Schaftes 7b entspricht dem Durchmesser 6b der Öse 6a.

Der Halter 4 ist über die Schraube 5 an einem Ausfallende eines Gabelrohrs starr angeschraubt. Im angeschraubten Zustand liegt der Kopf der Befestigungsschraube innerhalb des Bohrungsbereichs 4a, an den sich eine Durchgangsbohrung 4f mit einem kleineren Durchmesser anschließt, die von dem Gewinde der Schraube 5 durchsetzt wird.

Statt der Doppelstrebe mit den Strebenbereichen 6c und 6d kann die gleiche Befestigung bei einer Einzelstrebe verwendet werden. Wesentlich ist nur, daß auch eine Einzelstrebe eine Öse 6a mit einer Durchgangsöffnung 6b aufweist, die von dem Schaft 7b des Scherbolzens 7 durchsetzt werden kann.

Das in der Umgangssprache als Schutzblech bezeichnete Teil 11 wird in der Fachsprache auch ganz allgemein als Radschützer bezeichnet.

## Patentansprüche

1. Vorrichtung zur Befestigung mindestens einer Schutzblechstrebe (6c; 6d) am Ausfallende (3a) einer Fahrradgabel (3), mit einem starr an der Fahrradgabel (3) befestigten Halter (4), an dem ein eine Öse (6a) aufweisendes Ende der Schutzblechstrebe (6c; 6d) in einer die Öse (6a) aufnehmenden Aufnahmeöffnung fixierbar ist,
**dadurch gekennzeichnet,**
**daß** ein Scherbolzen (7) vorgesehen ist, der mit einem Schaft (7b) die Durchgangsöffnung (6b) der Öse (6a) mindestens teilweise durchsetzt und in dem Halter (4) fixierbar ist, wobei der Scherbolzen (7) eine Sollbruchstelle (7c) aufweist, die bei Überschreiten einer durch die Öse (6a) quer auf den Schaft (7b) einwirkenden Last bricht und die Öse (6a) für ein Austauchen aus der Aufnahmeöffnung des Halters (4) freigibt.

2. Vorrichtung nach Anspruch 1,
**dadurch gekennzeichnet,**
**daß** die Aufnahmeöffnung ein Schlitz (4b) ist, dessen Breite (b) der Dicke (d) der Öse (6a) entspricht.

3. Vorrichtung nach Anspruch 1 oder 2,
**dadurch gekennzeichnet,**
**daß** der Scherbolzen (7) einen an den Schaft (7b) anschließenden Kopf (7a) aufweist.

4. Vorrichtung nach mindestens einem der Ansprüche 1 bis 3,
**dadurch gekennzeichnet,**
**daß** der Halter (4) eine gestufte, bis zur Aufnahmeöffnung durchgehende Bohrung (4d, 4e) aufweist, wobei der Kopf (7a) in dem größeren Durchmesser (4d) der Bohrung verrastbar ist.

5. Vorrichtung nach mindestens einem der Ansprüche 1 bis 4,
**dadurch gekennzeichnet,**
**daß** der Kopf (7a) und der größere Durchmesser (4d) der Bohrung eine zueinander komplementäre Rastrippe (7d) und Rastnut (4c) aufweisen.

6. Vorrichtung nach mindestens einem der Ansprüche 1 bis 5,
**dadurch gekennzeichnet,**
**daß** der Außendurchmesser des Schafts (7b) zumindest annähernd dem Durchmesser (6b) der Öse (6a) entspricht.

7. Vorrichtung nach mindestens einem der Ansprüche 1 bis 6,
**dadurch gekennzeichnet,**
**daß** der Schaft (7b) des Scherbolzens (7) hohl ausgebildet ist.

8. Vorrichtung nach mindestens einem der Ansprüche 1 bis 7,
**dadurch gekennzeichnet,**
**daß** die Sollbruchstelle (7c) als über den Umfang umlaufende Nut ausgebildet ist.

9. Vorrichtung nach mindestens einem der Ansprüche 1 bis 8,
**dadurch gekennzeichnet,**
**daß** der Schaft (7b) die Öse (6a) lediglich über einen Teil von deren Dicke (d) durchsetzt.

10. Vorrichtung nach mindestens einem der Ansprüche 1 bis 9,
**dadurch gekennzeichnet,**
**daß** die als umlaufende Nut ausgebildete Sollbruchstelle (7c) benachbart zu einer Stirnfläche der Öse (6a) innerhalb von deren Durchgangsöffnung (6b) verläuft.

11. Vorrichtung nach mindestens einem der Ansprüche 1 bis 10,
**dadurch gekennzeichnet,**
**daß** der Scherbolzen (7) aus Kunststoff besteht.

12. Vorrichtung nach mindestens einem der Ansprüche 1 bis 11,
**dadurch gekennzeichnet,**
**daß** der Halter (4) aus Kunststoff besteht.

## Claims

1. Device for fixing at least one mudguard stay (6c; 6d) to the dropout (3a) of a bicycle fork (3), having a bracket (4) fixed rigidly to the bicycle fork (3), to which an end of the mudguard stay (6c; 6d) comprising an eye (6a) is adapted to be fixed in a receiving opening receiving the eye (6a),
**characterised in that**
a shear pin (7) is provided which projects with a shaft (7b) at least partially through the passage opening (6b) of the eye (6a) and is adapted to be fixed in the bracket (4), wherein the shear pin (7) has a point of weakness (7c) which breaks if a load acting through the eye (6a) transversely on the shaft (7b) is exceeded and releases the eye (6a) for escaping from the receiving opening of the bracket (4).

2. Device according to claim 1,
**characterised in that**
the receiving opening is a slit (4b), the breadth (b) of which corresponds to the thickness (d) of the eye (6a).

3. Device according to claim 1 or 2,
**characterised in that**
the shear pin (7) comprises a head (7a) connected to the shaft (7b).

4. Device according to at least one of the claims 1 to 3,
**characterised in that**
the bracket (4) comprises a stepped bore (4d, 4e) going through as far as the receiving opening, wherein the head (7a) can be latched in the larger diameter (4b) of the bore.

5. Device according to at least one of the claims 1 to 4,
**characterised in that**
the head (7a) and the larger diameter (4d) of the bore comprise a latch rib (7d) and a latch groove (4c) which are complementary to each other.

6. Device according to at least one of the claims 1 to 5,
**characterised in that**
the outer diameter of the shaft (7b) corresponds at least virtually to the diameter (6b) of the eye (6a).

7. Device according to at least one of the claims 1 to 6,
**characterised in that**
the shaft (7b) of the shear pin (7) is formed so as to be hollow.

8. Device according to at least one of the claims 1 to 7,
**characterised in that**
the point of weakness (7c) is formed as a groove running around the periphery.

9. Device according to at least one of the claims 1 to 8,
**characterised in that**
the shaft (7b) goes through the eye (6a) merely over a part of its thickness (d).

10. Device according to at least one of the claims 1 to 9,
**characterised in that**
the point of weakness (7c) formed as a surrounding groove runs adjacently to an end face of the eye (6a) within its passage opening (6b).

11. Device according to at least one of the claims 1 to 10,
**characterised in that**
the shear pin (7) is made of plastic.

12. Device according to at least one of the claims 1 to 11,
**characterised in that**
the bracket (4) is made of plastic.

## Revendications

1. Dispositif pour la fixation d'au moins un étrésillon de garde-boue (6c; 6d) à l'extrémité (3a) d'une fourche de bicyclette (3), avec un support (4) fixé rigidement à la fourche de bicyclette (3) auquel une extrémité de l'étrésillon du garde-boue (6c; 6d) présentant une boucle (6a) peut être fixée dans une ouverture de réception accueillant ladite boucle (6a),
**caractérisé en ce qu'**est prévue une goupille de rupture (7) qui traverse, au moins partiellement, l'ouverture de passage (6b) de la boucle (6a) avec une tige (7b) et qui peut être fixée dans le support (4), ladite goupille de rupture (7) présentant un point destiné à la rupture (7c) qui se brise quand une charge exercée perpendiculairement sur la tige (7b) par la boucle (6a) est dépassée et libère ladite boucle (6a) qui sort alors de l'ouverture de réception du support (4).

2. Dispositif selon la revendication 1,
**caractérisé en ce que**
l'ouverture de réception est une fente (4b) dont la largeur (b) correspond à l'épaisseur (d) de la boucle (6a).

3. Dispositif selon revendication 1 ou 2,
**caractérisé en ce que**
la goupille de rupture (7) présente une tête prolongeant la tige (7b).

4. Dispositif selon l'une au moins des revendications 1 à 3,
**caractérisé en ce que**
le support (4) présente un alésage en gradins (4d, 4e) continu jusqu'à l'ouverture de réception, la tête (7a) pouvant s'enclencher dans le plus grand diamètre (4d) de l'alésage.

5. Dispositif selon l'une au moins des revendications 1 à 4,
**caractérisé en ce que**
la tête (7a) et le plus grand diamètre (4d) de l'alésage présentent une nervure d'arrêt (7d) et une rainure d'arrêt (4c) complémentaires.

6. Dispositif selon l'une au moins des revendications 1 à 5,
**caractérisé en ce que**
le diamètre extérieur de la tige (7b) correspond au moins approximativement au diamètre (6b) de la boucle (6a).

7. Dispositif selon l'une au moins des revendications 1 à 6,
**caractérisé en ce que**
la tige (7b) de la goupille de rupture (7) est creuse.

8. Dispositif selon l'une au moins des revendications 1 à 7,
**caractérisé en ce que**
le point destiné à la rupture (7c) est conçu en tant que rainure périphérique.

9. Dispositif selon l'une au moins des revendications 1 à 8,
**caractérisé en ce que**
la tige (7b) ne s'engage dans la boucle (6a) que sur une partie de son épaisseur (d).

10. Dispositif selon l'une au moins des revendications 1 à 9,
**caractérisé en ce que**
le point destiné à la rupture (7c), conçu en tant que rainure périphérique, s'étend dans le voisinage d'une surface frontale de la boucle (6a), à l'intérieur de l'ouverture de passage de celle-ci.

11. Dispositif selon au moins l'une des revendications 1 à 10,
**caractérisé en ce que**
la goupille de rupture (7) consiste en matière synthétique.

12. Dispositif selon au moins l'une des revendications 1 à 11,
**caractérisé en ce que**
le support (4) consiste en matière synthétique.
